# EUROPÄISCHE PATENTSCHRIFT

(11) **EP 2 513 509 B1**
(45) Veröffentlichungstag und Bekanntmachung des Hinweises auf die Patenterteilung: **23.08.2017**
(21) Anmeldenummer: 10805587.2
(22) Anmeldetag: 13.12.2010
(51) Int. Cl.: F16F 13/10

(54) **HYDRAULISCH DÄMPFENDES AGGREGATLAGER**
HYDRAULICALLY DAMPING ENGINE MOUNT
PALIER DE GROUPE À AMORTISSEMENT HYDRAULIQUE

(30) Priorität: 17.12.2009 DE 102009054881
(43) Veröffentlichungstag der Anmeldung: 24.10.2012
(73) Patentinhaber: BOGE Elastmetall GmbH, 49401 Damme (DE)
(72) Erfinder: SCHÄFER, Christoph, 53489 Sinzig (DE)
(74) Vertreter: Bossmeyer, Jörg Peter
(86) Internationale Anmeldenummer: PCT/DE2010/050089
(87) Internationale Veröffentlichungsnummer: WO 2011/072666

(56) Entgegenhaltungen:
- EP-A2- 1 382 881
- WO-A1-2009/096378
- US-A- 6 082 721

## Beschreibung

Die Erfindung betrifft ein Axiallager, nämlich ein Aggregatbeziehungsweise Motorlager, mit einer hydraulischen Dämpfung. Sie bezieht sich insbesondere auf eine spezielle Ausgestaltung der äußeren Kontur der Tragfeder eines solchen Axiallagers.

Gattungsgemäße Lager, wie aus Dokument WO 2009/096378 A1 bekannt, werden im Fahrzeugbau zur Lagerung von Motor und Getriebe eingesetzt, um die von diesen Aggregaten verursachten Schwingungen zu dämpfen und somit weitgehend deren Übertragung auf die Fahrgastzelle zu vermeiden. Sie bestehen aus einem Lagerkernteil, einer elastomeren Tragfeder und einem Gehäuse, welches das Lagerkernteil und die Tragfeder aufnimmt, wobei sich das Lagerkernteil an der zwischen ihm und dem Gehäuse angeordneten Tragfeder abstützt. Zur Realisierung der hydraulischen Dämpfung weisen entsprechende Lager zwei bezogen auf die axiale Richtung untereinander angeordnete Kammern zur Aufnahme eines fluiden Dämpfungsmittels auf. Die Kammern, nämlich eine Arbeitskammer und eine Ausgleichskammer, sind durch eine Kanaleinheit räumlich getrennt, jedoch durch einen in dieser Kanaleinheit ausgebildeten Kanal hydraulisch miteinander gekoppelt. Die elastomere Tragfeder ist zu ihrer mechanischen Stabilisierung durch ein oder mehrere metallische oder aus Kunststoff bestehende Elemente armiert.

Um die beim bestimmungsgemäßen Einsatz in der Hauptbelastungsrichtung, nämlich der axialen Richtung auftretenden Kräfte aufnehmen zu können, ist die Tragfeder derartiger Lager gegen eine axiale Verschiebung am Gehäuse gesichert. Sie kann hierzu durch Vulkanisation mit dem Gehäuse verbunden sein oder mittels eines zusätzlichen separaten Bauteils im Ergebnis eines Fügeprozesses formschlüssig am Gehäuse gesichert werden. Im erstgenannten Fall ist es als nachteilig anzusehen, dass die Vulkanisation an dem Gehäuse beziehungsweise dessen Innenseite mit einem Verlust von Formkapazität einhergeht, das heißt, dass für die zur Erzeugung der elastomeren Tragfeder verwendeten Formen wegen des mit in sie einzulegenden Gehäuses ein etwas größeres Volumen vorgesehen werden muss. Auf der anderen Seite ist bei der Sicherung mittels des bereits erwähnten separaten Bauteils neben diesem zusätzlichen Bauteil bei der Fertigung ein zusätzlicher Fügeprozess erforderlich, welcher den Fertigungsaufwand erhöht. Zudem kann die mittels des separaten Bauteils erfolgende Sicherung aus geometrischen Gründen häufig nicht vollständig auf dem Umfang der Tragfeder umlaufend erfolgen, so dass die entsprechende Fügung beim längerfristigen Einsatz des Lagers der konstanten Belastung durch die Motor- beziehungsweise Aggregatmasse eventuell nicht standhält.

Aufgabe der Erfindung ist es daher, ein hydraulisch dämpfendes Aggregatlager zu schaffen, welches die vorgenannten Nachteile vermeidet, indem es insbesondere einen einfachen Aufbau aufweist und eine Vulkanisation der Tragfeder an dem Gehäuse entbehrlich macht.

Die Aufgabe wird durch ein Lager mit den Merkmalen des Patentanspruchs 1 gelöst. Vorteilhafte Aus- beziehungsweise Weiterbildungen sind durch die Unteransprüche gegeben.

Das zur Lösung der Aufgabe vorgeschlagene hydraulisch dämpfende Aggregatlager ist in an sich bekannter Weise ausgebildet und besteht aus einem vorzugsweise auf einer Seite von einem Deckel verschlossenen Gehäuse, welches eine Tragfeder, ein sich in axialer Richtung in dem Gehäuse erstreckendes, durch die Tragfeder abgestütztes Lagerkernteil sowie zwei in axialer Richtung untereinander angeordnete Kammern für ein fluides Dämpfungsmittel aufnimmt. Die Kammern, nämlich eine Arbeitskammer und eine von der Arbeitskammer durch eine Kanaleinheit räumlich getrennte Ausgleichskammer, sind durch einen in der Kanaleinheit ausgebildeten Kanal hydraulisch miteinander gekoppelt. Dabei ist die Arbeitskammer von der Tragfeder mit dem Lagerkernteil und der Kanaleinheit umschlossen, während die Ausgleichskammer von der Kanaleinheit sowie einer zwischen der Kanaleinheit und einem auf der der Arbeitskammer abgewandten Seite der Kanaleinheit angeordneten elastischen Balg beziehungsweise von der Kanaleinheit sowie dem zwischen der Kanaleinheit und dem vorzugsweise vorhandenen Deckel des Gehäuses angeordneten Balg umschlossen ist. In die elastomere Feder sind eine oder mehrere Einlegeteile eingefügt, welche zumindest teilweise durch das Elastomer der Feder bedeckt sind und diese armieren beziehungsweise mechanisch stabilisieren.

Erfindungsgemäß ist jedoch die Tragfeder an dem Gehäuse weder durch Vulkanisation noch mit Hilfe einer durch Verformung des Gehäuses bewirkten Fügung gehalten. Stattdessen ist auf der Außenkontur der Tragfeder in deren Umfangsrichtung eine Gewindesteigung ausgebildet, welche bei der Montage des Lagers mit einer korrespondierenden Innenkontur des Gehäuses in Eingriff gebracht wird. Dabei werden die Tragfeder und das Gehäuse so miteinander in Eingriff gebracht, dass die elastomere Haut der Tragfeder zur Vermeidung von Geräuschen beim bestimmungsgemäßen Einsatz des Lagers in axialer und radialer Richtung vorgespannt ist.

Aufgrund dessen, dass die Tragfeder nicht durch Vulkanisation mit dem Gehäuse verbunden werden muss, kann das eigentliche Lager, nämlich die Tragfeder und das sich an ihr abstützende Lagerkernteil, unabhängig von dem Gehäuse vulkanisiert und so als modulare Einheit vorgefertigt werden. Gleichzeitig wird in vorteilhafter Weise, gegenüber aus dem Stand der Technik bekannten Aggregatlagern, bei denen die Tragfeder durch Vulkanisation an der Innenseite des Gehäuses gehalten ist, die benötigte Formkapazität reduziert. Da andererseits auch kein zusätzliches separates Teil zur Sicherung der Tragfeder in dem Gehäuse durch eine Fügung erforderlich ist, ergeben sich ein einfacher Lageraufbau mit weniger Einzelkomponenten, eine Gewichts-/Kostenersparnis und zudem ein Bauraumgewinn. Die besondere Art der Festlegung der Tragfeder im Gehäuse und die bereits schon angesprochene Modulfähigkeit der Tragfeder ermöglichen es, sehr flexibel Axiallager mit unterschiedlichen Gebrauchseigenschaften bereitzustellen, indem unterschiedliche Kombinationen aus Lagergehäuse und Tragfeder, das heißt Gummi-Metall-Teil oder Gummi-Kunststoff-Teil, gebildet werden.

Soweit vorstehend und nachfolgend von einem Gummi-Metall-Teil oder Gummi-Kunststoff-Teil gesprochen wird, geht dies davon aus, dass für den elastomeren Teil der Tragefeder im Allgemeinen Gummi verwendet wird. Grundsätzlich ist es aber auch möglich hierfür andere elastomere Werkstoffe, wie beispielsweise Silikon zu verwenden, was gleichermaßen für das erfindungsgemäße Aggregatlager gilt. Mithin müsste korrekter, aber in weniger üblicher Weise von einem Elastomer-Metall-Teil beziehungsweise einem Elastomer-Kunststoff-Teil gesprochen werden. Insoweit sollen im Weiteren, sofern nicht anders angegeben, die Begriffe Gummi-Metall-Teil beziehungsweise Gummi-Kunststoff-Teil und Elastomer-Metall-Teil beziehungsweise Elastomer-Kunststoff-Teil synonym gebraucht werden. Gleiches gilt im Hinblick auf die Bedeckung des oder der die Tragfeder armierenden Einlegeteile sowie der Außenkontur im Bereich der Gewindesteigung mit Gummi beziehungsweise für die Gummierung der vorgenannten Teile oder Bereiche, bei der es sich demnach um eine Bedeckung mit einem Elastomer, wie beispielsweise Gummi handelt.

Die Gewindesteigung der Tragfeder ist vorteilhafterweise nach innen hin, also in Richtung der axialen Mittelachse des Lagers, zumindest teilweise durch das bereits erwähnte Einlegeteil armiert, dessen Geometrie hierzu entsprechend ausgebildet ist. Hierdurch erhöht sich einerseits die mechanische Stabilität der Tragfeder in diesem Bereich. Darüber hinaus ist dieses auch fertigungstechnisch von Vorteil, da hierdurch die Möglichkeit gegeben ist, die Gewindesteigung mittels eines so genannten seitlich von außen nach innen wirkenden Schiebers einzubringen, wobei die Armierung als innere Unterstützung zur Erzeugung des notwendigen Gegendrucks wirkt. Ferner ist vorzugsweise außerdem die Außenkontur der Tragfeder im Bereich der Gewindesteigung vollständig gummiert, während in anderen Bereichen gegebenenfalls das armierende Einlegeteil bezüglich des Elastomers der Tragfeder auch nach außen treten kann. Durch die vollständige Gummierung im Bereich der Steigung wird das Entstehen unerwünschter Geräusche durch unvermeidliche Relativbewegungen zwischen der Tragfeder und dem Gehäuse beim bestimmungsgemäßen Einsatz des Lagers verhindert. Im Zusammenhang mit der erfindungsgemäßen Fügung wird hierdurch demnach eine zusätzliche Entkopplung erreicht. Dabei ist somit gewissermaßen eine zusätzliche Feder gebildet, die je nach Vorspannung, Shorehärte und Schichtdicke mehr oder weniger dämpft beziehungsweise isoliert. Besonders vorteilhaft ist es jedoch, wenn das Einlegeteil, welches die Tragfeder auch im Bereich der erfindungsgemäßen Gewindesteigung armiert, vollständig gummiert, das heißt in das Elastomer der Tragfeder einvulkanisiert ist.

Vorzugsweise weist die elastomere Tragfeder auf der Seite ihres, dem vorzugsweise vorhandenen Deckel abgewandten axialen Endes an ihrer Außenkontur eine leicht radial nach außen aufragende hügelartige Anformung auf, die sich bei vollständig in das Gehäuse eingedrehter Tragfeder in eine entsprechende Ausbuchtung des Gehäuses hineinschiebt. Zwar treten an einem Aggregatlager bei seinem bestimmungsgemäßen Einsatz im Allgemeinen keine torsionalen Belastungen auf. Jedoch ist durch die vorgenannte hügelartige Anformung eine insoweit zusätzlich wirkende Sicherung gegen ein Herausdrehen der Tragfeder aus dem Gehäuse des Lagers gegeben. Alternativ kann eine solche zusätzliche Sicherung auch dadurch realisiert sein, dass nach dem Erreichen der Endposition für die Tragfeder beim Fügen, also nach dem Hineindrehen der Tragfeder in das Gehäuse, ein beziehungsweise das die Tragfeder armierende Einlegeteil oder das Gehäuse radial zur Lagerachse hin verformt wird. Bei der letztgenannten Alternative ist einer Verformung des Einlegeteils der Vorzug zu geben, da dies vorzugsweise gummiert beziehungsweise mit dem Elastomer der Tragfeder bedeckt ist und dadurch auch nach einer entsprechenden, mechanisch bewirkten Verformung keine Korrosionsprobleme entstehen. Vorzugsweise kann darüber hinaus in dem Lager noch ein axialer Anschlag vorgesehen sein, durch welchen die Tragfeder beim Eindrehen in das Gehäuse in axialer Richtung positioniert wird.

Je nach dem vorgesehenen Einsatzzweck des Lagers und dem dabei gewünschten Dämpfungsverhalten können die Kanaleinheit und der in der Kanaleinheit ausgebildete Kanal unterschiedlich gestaltet sein. Bei einer praxisgerechten Ausbildungsform ist der Kanal als ein auf dem Umfang der Kanaleinheit umlaufender Strömungskanal ausgebildet. Eine weitere mögliche Ausbildungsform ist dadurch gegeben, dass die Kanaleineinheit als eine Düsenplatte und der Kanal als ein in axialer Richtung durch diese Düsenplatte geführter Düsenkanal beziehungsweise Drosselkanal ausgebildet ist. Die Tragfeder ist vorzugsweise zur Vereinfachung ihres Einfügens in das Gehäuse, bei dem die Tragfeder gewissermaßen in das Gehäuse eingeschraubt wird, auf ihrer Außenkontur mit einem Schmiermittel benetzt. In diesem Zusammenhang wird zu dem angenommen, dass das Schmiermittel nach dem Fügen des Lagers beziehungsweise bei dessen bestimmungsgemäßen Einsatz aus dem Lager hinausdiffundiert und dabei eine Art Klebeeffekt an den zuvor mit dem Schmiermittel benetzten Bereichen der Außenkontur der Tragfeder entsteht, welcher möglicherweise ebenfalls dazu beiträgt, die Tragfeder bezüglich ihrer axialen Position im Gehäuse, das heißt gegen ein Herausdrehen zu sichern.

Das fluide Dämpfungsmittel kann gegebenenfalls gleichzeitig mit der Ausbildung der Tragfeder und den beiden in ihr ausgebildeten Kammern in das Lager eingebracht werden. Es ist aber auch möglich, das Dämpfungsmittel im Nachhinein in die Tragfeder beziehungsweise deren Kammern einzubringen. Gemäß einer dazu vorgesehenen Ausbildungsform weist das von der armierten Tragfeder ausgebildete Gummi-Metall-Teil oder Gummi-Kunststoff-Teil auf seinem Umfang mindestens eine radial gerichtete Durchtrittsöffnung zur Befüllung mit dem Dämpfungsmittel auf. Möglich ist es aber auch, zur Befüllung mit dem Dämpfungsmittel eine entsprechende Bohrung in dem Lagerkernteil vorzusehen.

Die Gewindesteigung auf der Außenkontur der Tragfeder und die mit ihr korrespondierende Innenkontur des Gehäuses sind vorzugsweise so ausgebildet, dass zwischen ihnen über den gesamten Lagerumfang in der axialen Richtung auf jeder Seite eine Überdeckung von etwa 2 mm zwischen der Tragfeder und dem Gehäuse besteht. Grundsätzlich ist es aber möglich, die Gewindesteigung auch nur auf einem Teilumfang der Tragfeder mit einer Überdeckung von etwa 1 mm auszubilden. Insoweit erhöht die Ausbildung einer auf dem gesamten Umfang umlaufenden Gewindesteigung mit einer Überdeckung von bis zu 2 mm zwischen der Tragfeder und dem Gehäuse die axiale Belastbarkeit. Demgemäß ist die Tragfeder entsprechend dieser bevorzugten Ausbildungsform auch bei hohen axialen Belastungen zuverlässig in dem Gehäuse festgelegt.

Die Kanaleinheit wird entsprechend einer bevorzugten Ausbildungsform der Erfindung durch einen nach innen gerichteten Kragen des die Tragfeder armierenden Einlegeteils gehalten. Der betreffende Kragen ist dabei durch Deformation eines bezüglich der axialen Richtung deckelseitig aus dem Gehäuse herausragenden Endes dieses Einlegeteils gebildet. Eine alternative Möglichkeit besteht darin, dass die Kanaleinheit zwischen der Tragfeder und einem vormontierten Deckel gehalten wird.

Wiederum abhängig vom Einsatzzweck des Lagers kann dessen Gehäuse als ein Flanschgehäuse mit einem Flansch ausgebildet sein, welcher Durchbrüche zur Befestigung des Lagers an seinem Einbauort aufweist. Während das die Tragfeder armierende Außenteil aus Metall oder Kunststoff bestehen kann, werden das Lagerkernteil und das Gehäuse aus Stabilitätsgründen vorzugsweise aus Metall ausgebildet. Das Lagerkernteil kann aber auch als ein Kunststoffteil mit einem Metallgewindeeinsatz ausgebildet sein. Der das Gehäuse vorzugsweise verschließende Deckel kann ebenfalls wahlweise aus Metall oder Kunststoff bestehen. Vorzugsweise ist das Lager noch auf seiner dem Balg zur Bildung der Ausgleichskammer beziehungsweise dem Deckel abgewandten Seite durch eine Kappe abgedeckt, welche die Tragfeder vor Wasser und eindringendem Schmutz schützt.

Die Erfindung soll nachfolgend anhand von Ausführungsbeispielen im Verhältnis zum Stand der Technik nochmals näher erläutert werden. In den Zeichnungen zeigen:
- Fig. 1:: eine mögliche Ausbildungsform der Tragfeder des erfindungsgemäßen Aggregatlagers,
- Fig. 2:: eine mögliche Ausbildungsform des Aggregatlagers mit der von dem Gehäuse aufgenommenen Tragfeder,
- Fig. 3:: eine gegenüber der Fig. 2 alternative Ausbildungsform des erfindungsgemäßen Aggregatlagers,
- Fig. 4:: ein gattungsgemäßes Aggregatlager nach dem Stand der Technik.

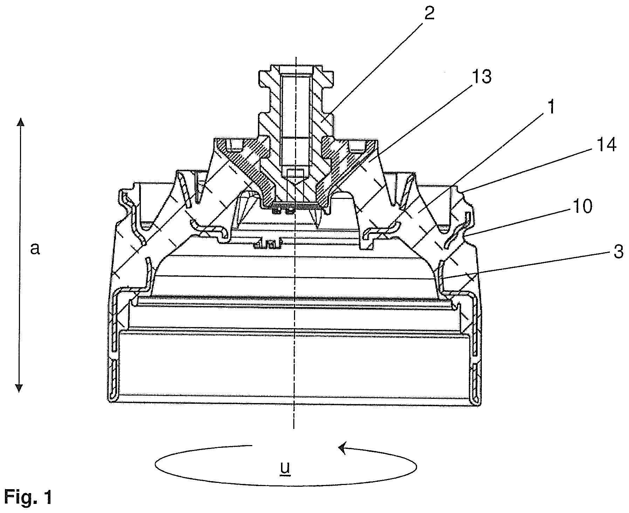

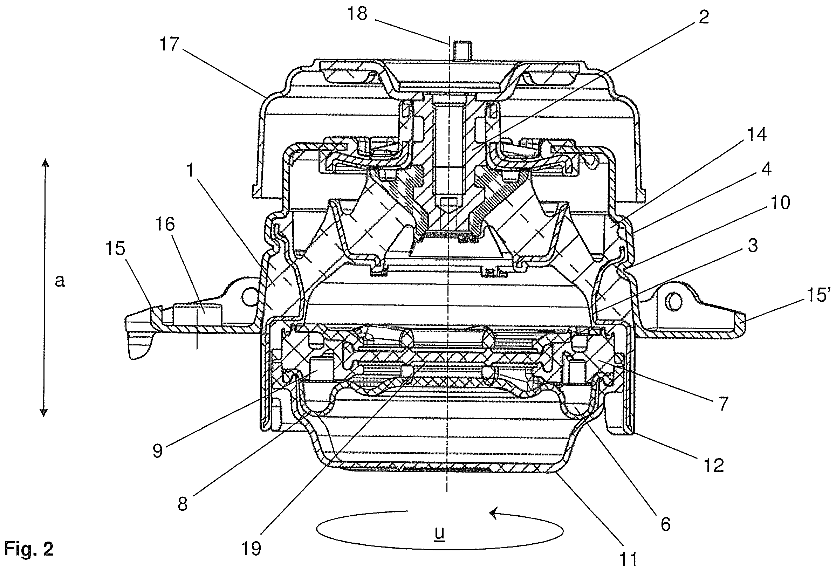

Die Fig. 1 zeigt eine mögliche Ausbildungsform der Tragfeder 1 des erfindungsgemäßen Aggregatlagers mit dem von der Tragfeder 1 gestützten Lagerkernteil 2 in einer bezüglich der axialen Richtung a geschnittenen Darstellung. Die Tragfeder 1 ist als ein im Wesentlichen zylinderförmiges Elastomer- beziehungsweise Gummiteil ausgebildet, welches sich auf der Seite seines axialen Endes 13 kegelstumpfförmig verjüngt, wobei an dieser Seite das Lagerkernteil 2 in die Tragfeder 1 hineinragt und sich an deren in diesem Bereich einander zuneigenden Wänden abstützt. Das entsprechende, die Tragfeder 1 ausbildende Gummiteil ist durch ein in das Elastomer einvulkanisiertes Einlegeteil 3 aus Metall armiert. In erfindungswesentlicher Weise ist unterhalb des sich kegelstumpfförmig verjüngenden Abschnitts, also in dem im Wesentlichen zylinderförmigen Abschnitt, auf der Außenkontur der Tragfeder 1 eine in der Umfangsrichtung u verlaufende, vorzugsweise auf ihrem Umfang einmal herumgeführte Gewindesteigung 10 ausgebildet. Diese wird bei der Montage des Lagers erfindungsgemäß mit einer korrespondierenden Kontur der Innenfläche des Gehäuses 4 (siehe dazu Fig. 2) in Eingriff gebracht. Das dargestellte, die Tragfeder 1 ausbildende Gummi-Metall-Teil kann mit einer hier nicht gezeigten Durchtrittsöffnung versehen sein, über welche in das bereits vormontierte Gummi-Metall-Teil oder Gummi-Kunststoff-Teil das fluide Dämpfungsmittel eingebracht werden kann.

Die Fig. 2 zeigt eine erste mögliche Ausbildungsform des erfindungsgemäßen Aggregatlagers ebenfalls in einer axial geschnittenen Darstellung, wobei hier die Tragfeder 1 bereits in das Gehäuse 4 eingefügt, also deren Gewindesteigung 10 mit der korrespondierenden Innenkontur des Gehäuses 4 in Eingriff gebracht ist. Dabei hat sich eine auf der Seite des axialen Endes 13 an der Außenkontur der Tragfeder 1 ausgebildete hügelartige Anformung 14 in eine korrespondierende Ausbuchtung des Einlegeteils 3 hineingeschoben, so dass die Tragfeder 1 beim Einsatz des Lagers gegen ein eventuelles, durch entsprechende Belastungen verursachtes Herausdrehen beziehungsweise ein in axialer Richtung a nach oben erfolgendes Hinausbewegen aus dem Gehäuse 4 zusätzlich gesichert ist. In der Darstellung sind die im Inneren des Gehäuses 4 ausgebildeten Kammern 5, 6, nämlich die Arbeitskammer 5 unterhalb des von der Tragfeder 1 abgestützten Lagerkernteils 2 und die von ihr durch die Kanaleinheit 7 räumlich getrennte Ausgleichskammer 6, gut zu erkennen. Wie ersichtlich, ist die Arbeitskammer 5 von der Tragfeder 1 mit dem Lagerkernteil 2 und der Kanaleinheit 7 eingeschlossen, während die Wände der Ausgleichskammer 6 durch die Kanaleinheit 7 und einen zwischen der Kanaleinheit 7 und dem hier ebenfalls erkennbaren Deckel 11 angeordneten elastischen Balg 8 gebildet sind. Über den in der Kanaleinheit 7 ausgebildeten Strömungskanal 9 sind die Arbeitskammer 5 und die Ausgleichskammer 6 hydraulisch miteinander gekoppelt, so dass das von der Arbeitskammer 5 aufgenommene Fluid bei entsprechender axialer Belastung des Lagers, die Ausgleichskammer 6 beziehungsweise deren Balg 8 aufblähend, über den Kanal 9 in die Ausgleichskammer 6 entweichen kann. In die Kanaleinheit 7 eingebettet ist eine Membran 19, durch welche bei hochfrequenten Belastungen eine Verhärtung des Lagers und somit die Übertragung akustischer Schwingungen verhindert wird. Das Gehäuse 4 des Lagers ist als ein Flanschgehäuse ausgebildet, so dass das Lager am bestimmungsgemäßen Einbauort über in den Flansch 15, 15' eingebrachte Durchbrüche 16, 16' durch Verschraubung an anderen Teilen befestigt werden kann. Bei der in der Fig. 2 gezeigten Ausbildungsform wird die Kanaleinheit 7 durch einen Kragen des die Tragfeder 1 armierenden Einlegeteils 3 gehalten. Dazu wird - was hier noch nicht geschehen ist - das deckelseitig aus dem Gehäuse herausragende Ende 12 des Einlegeteil 3 nach radial innen verformt, nämlich in Richtung der Lagerachse 18 abgewinkelt. Das die Tragfeder 1 armierende Einlegeteil 3 ist bei dem gezeigten Lager vollständig gummiert. Auf der dem Deckel 11 gegenüberliegenden Seite ist das Lager zum Schutz der Tragfeder 1 vor Wasser und/oder Schmutz mit einer Kappe 17 abgedeckt.

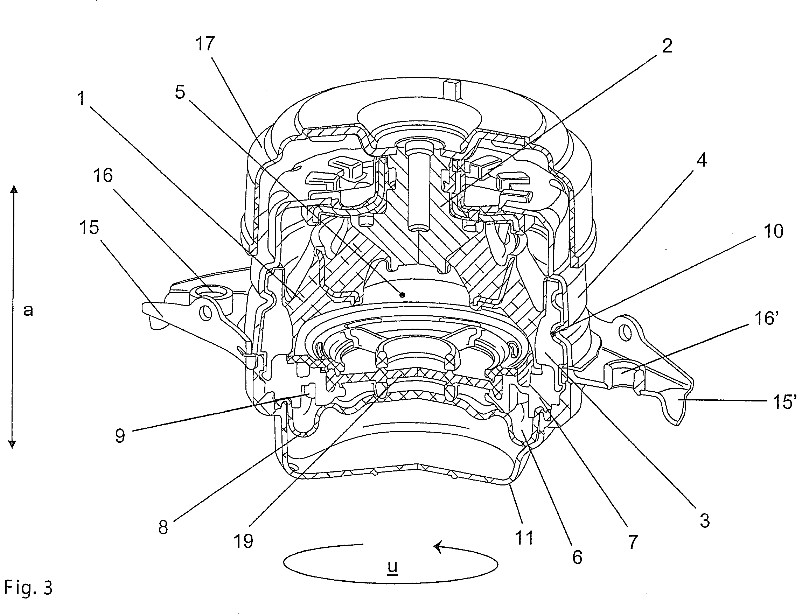

Abweichend davon ist in der alternativen, in räumlicher und teilweise geschnittener Darstellung gezeigten Ausbildungsform gemäß der Fig. 3 die Kanaleinheit 7 zwischen der Tragfeder 1 beziehungsweise dem die Tragfeder 1 armierenden Einlegeteil 3 und dem am Gehäuse 4 vormontierten Deckel 11 gehalten. Darüber hinaus ist jedoch das in der Fig. 3 gezeigte Lager in gleicher Weise aufgebaut wie das Ausführungsbeispiel gemäß der Fig. 2, wobei insbesondere auch hier auf dem Außenumfang der Tragfeder 1 eine Gewindesteigung 10 und auf der Innenseite des Gehäuses 4 eine mit dieser Gewindesteigung 10 korrespondierende Kontur ausgebildet sind.

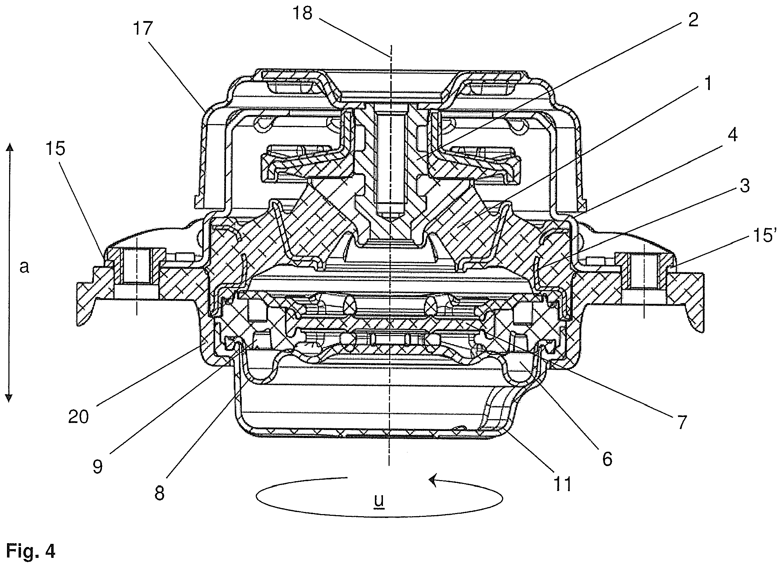

Zum Vergleich mit der erfindungsgemäßen Lager ist in der Fig. 4 ein gattungsgemäßes Axiallager nach dem Stand der Technik in axial geschnittener Darstellung gezeigt. Hier ist zu erkennen, dass die Tragfeder 1 mittels eines separaten Bauteils 20 gesichert wird, welches unterhalb des Flansches 15, 15' des Gehäuses 4 angeordnet und ebenfalls mit einem entsprechenden Flansch ausgebildet ist. Zur Sicherung der Tragfeder 1 ist dieses separate Bauteil 20 in einem Fügeprozess verformt worden, so dass es nach innen ragende Abschnitte aufweist, auf welchen sich die Tragfeder 1 gewissermaßen abstützt.

### Bezugszeichenliste

- 1: Tragfeder
- 2: Lagerkernteil
- 3: Einlegeteil, Armierung
- 4: Gehäuse
- 5: Arbeitskammer
- 6: Ausgleichskammer
- 7: Kanaleinheit
- 8: Balg
- 9: Kanal
- 10: Gewindesteigung
- 11: Deckel
- 12: deckelseitiges Ende
- 13: axiales Ende
- 14: Anformung
- 15, 15': Flansch
- 16, 16': Durchbruch
- 17: Kappe
- 18: Lagerachse
- 19: Membran
- 20: separates Teil

- a: axiale Richtung
- u: Umfangsrichtung

## Patentansprüche

1. Hydraulisch dämpfendes Aggregatlager mit einem Gehäuse (4), welches eine elastomere Tragfeder (1) mit mindestens einem Einlegeteil aus Metall oder Kunststoff, ein sich in axialer Richtung (a) in dem Gehäuse (4) erstreckendes, durch die Tragfeder (1) abgestütztes Lagerkernteil, (2) sowie zwei in axialer Richtung (a) untereinander angeordnete Kammern (5, 6) für ein fluides Dämpfungsmittel, nämlich eine Arbeitskammer (5) und eine von der Arbeitskammer (5) durch eine Kanaleinheit (7) räumlich getrennte Ausgleichskammer (6), aufnimmt, wobei die von der Tragfeder (1) mit dem Lagerkernteil (2) und der Kanaleinheit (7) umschlossene Arbeitskammer (5) und die von der Kanaleinheit (7) sowie einer zwischen der Kanaleinheit (7) und einem auf der der Arbeitskammer (5) abgewandten Seite der Kanaleinheit (7) angeordneten elastischen Balg (8) umschlossene Ausgleichskammer (6) über einen Kanal (9) in der Kanaleinheit (7) miteinander gekoppelt. sind, **dadurch gekennzeichnet, dass** auf der Außenkontur der mit dem Lagerkernteil (2) als modulare Einheit vorgefertigten elastomeren Tragfeder (1) in deren Umfangsrichtung (u) eine Gewindesteigung (10) ausgebildet ist, die mit einer korrespondierenden Innenkontur des Gehäuses (4) in Eingriff gebracht ist.

2. Hydraulisch dämpfendes Aggregatlager nach Anspruch 1, **dadurch gekennzeichnet, dass** die Tragfeder (1) und das Gehäuse (4) so miteinander in Eingriff gebracht sind, dass die elastomere Haut der Tragfeder (1) in axialer Richtung (a) und radialer Richtung vorgespannt ist.

3. Hydraulisch dämpfendes Aggregatlager nach Anspruch 1 oder 2, dadurch gekenntzeichnet, dass die Gewindesteigung (10) zur Laserachse (18) hin zumindest teilweise durch mindestens ein Einlegeteil armiert ist.

4. Hydraulisch dämpfendes Aggregatlager nach einem der Ansprüche 1 bis 3, **dadurch gekennzeichnet, dass** das die Außenkontur der Tragfeder (1) im Bereich der Gewindesteigung (10) vollständig durch das Elastomer der Tragfeder (1) gebildet ist.

5. Hydraulisch dämpfendes Aggregatlager nach einem der Ansprüche 1 bis 4, **dadurch gekennzeichnet, dass** das mindestens eine Einlegeteil (3) vollständig in das Elastomer der Tragfeder (1) einvulkanisiert ist.

6. Hydraulisch dämpfendes Aggregatlager, nach einem der Ansprüche 1 bis 5, **dadurch gekennzeichnet, dass** die elastomere Tragfeder (1) auf der Seite ihres, einem das Gehäuse (4) verschließenden Deckel (11) abgewandten axialen Endes (13) an ihrer Außenkontur eine radial nach außen aufragende hügelartige Anformung (14) aufweist, die sich bei vollständig in das Gehäuse (4) eingedrehter Tragfeder (1) in eine entsprechende Ausbuchtung des Gehäuses (4) hineinschiebt.

7. Hydraulisch dämpfendes Aggregatlager nach einem der Ansprüche 1 bis 6, **dadurch gekennzeichnet, dass** der Kanal (9) als ein auf dem Umfang der Kanaleinheit (7) umlaufender Strömungskanal ausgebildet ist.

8. Hydraulisch dämpfendes Aggregatlager nach einem der Ansprüche 1 bis 6, **dadurch gekennzeichnet, dass** die Kanaleinheit (7) als eine Düsenplatte und der Kanal (9) als ein in axialer Richtung (a) durch die Düsenplatte geführter Düsenkanal ausgebildet ist.

9. Hydraulisch dämpfendes Aggregatlager nach einem der Ansprüche 1 bis 8, **dadurch gekennzeichnet, dass** die Tragfeder (1) auf ihrer Außenkontur mit einem Schmiermittel benetzt ist.

10. Hydraulisch dämpfendes Aggregatlager nach einem der Ansprüche 1 bis 9, **dadurch gekennzeichnet, dass** das von der armierten Tragfeder (1) ausgebildete Elastomer-Metall-Teil oder Elastomer-Kunststoff-Teil auf seinem Umfang eine radial gerichtete Durchtrittsöffnung zur Befüllung des Lagers mit dem Dämpfungsmittel aufweist.

11. Hydraulisch dämpfendes Aggregatlager nach einem der Ansprüche 1 bis 10, **dadurch gekennzeichnet, dass** durch die mit der korrespondierenden Innenkontur des Gehäuses (4) in Eingriff gebrachte Gewindesteigung (10) über den gesamten Lagerumfang in axialer Richtung (a) beidseits der Kanaleinheit (7) zwischen der Tragfeder (1) und dem Gehäuse (4) eine Überdeckung von etwa 2 mm gegeben ist.

12. Hydraulisch dämpfendes Aggregatlager nach einem der Ansprüche 1 bis 11, **dadurch gekennzeichnet, dass** die Kanaleinheit (7) durch einen nach radial innen gerichteten Kragen gehalten ist, welcher durch Deformation eines bezüglich der axialen Richtung (a) deckelseitig, aus dem Gehäuse (4) herausragenden Endes (12) des mindestens einen die Tragfeder (1) armierenden Einlegeteils (3) gebildet ist.

13. Hydraulisch dämpfendes Aggregatlager nach einem der Ansprüche 1 bis 12, **dadurch gekennzeichnet, dass** das Gehäuse (4) als ein Flanschgehäuse mit einem, Durchbrüche(16, 16') zur Befestigung des Lagers am Einbauort aufweisenden Flansch (15, 15') ausgebildet ist.

14. Hydraulisch dämpfendes Aggregatlager nach einem der Ansprüche 1 bis 13, **dadurch gekennzeichnet, dass** das Gehäuse (4) auf der Seite des Balgs (8) zu dessen Schutz durch einen Deckel (11) aus Metall oder Kunststoff verschlossen ist.

15. Hydraulisch dämpfendes Aggregatlager nach einem der Ansprüche 1 bis 14, **dadurch gekennzeichnet, dass** dieses auf der dem Balg (8) gegenüberliegenden Seite durch eine Kappe (17) abgedeckt ist.

## Claims

1. Hydraulically damping engine mount with a housing (4) accommodating an elastomeric support spring (1) with at least one insertion part of metal or plastic, a mount core part (2) extending in an axial direction (a) in the housing (4) and supported by the support spring (1), and also two chambers (5, 6) arranged together in the axial direction (a) for a fluid damping agent, namely a working chamber (5) and a equalisation chamber (6) spatially separated from the working chamber (5) by means of a channel unit (7), wherein the working chamber (5) enclosed by the support spring (1) with the mount core part (2) and the channel unit (7) and the equalisation chamber (6) enclosed by the channel unit (7) and by elastic bellows (8) arranged between the channel (7) and the side of the channel unit (7) facing away from the working chamber (5) are coupled to one another by means of a channel (9) in the channel unit (7), **characterised in that** a thread pitch (10) is formed on the outside contour of the elastomeric support spring (1) prefabricated with the mount core part (2) as a modular unit in the circumferential direction (u) thereof, which is brought into engagement with a corresponding inside contour of the housing (4).

2. Hydraulically damping engine mount according to Claim 1, **characterised in that** the support spring (1) and the housing (4) are brought into engagement with one another so that the elastomeric skin of the support spring (1) is pre-tensioned in the axial direction (a) and in a radial direction.

3. Hydraulically damping engine mount according to Claim 1 or 2, **characterised in that** the thread pitch (10) is at least partially reinforced towards the mount axis (18) by at least one insertion part.

4. Hydraulically damping engine mount according to any one of Claims 1 to 3, **characterised in that** the outside contour of the support spring (1) in the region of the thread pitch (10) is formed completely by the elastomer of the support spring (1).

5. Hydraulically damping engine mount according to any one of Claims 1 to 4, **characterised in that** the at least one insertion part (3) is completely vulcanised into the elastomer of the support spring (1).

6. Hydraulically damping engine mount according to any one of Claims 1 to 5, **characterised in that** the elastomeric support spring (1) on the side of its axial end (13) facing away from a cover (11) closing the housing (4) has on its outside contour a radially outwardly projecting hill-shaped protrusion (14), which when the support spring (1) is fully screwed into the housing (4) slides into a corresponding indentation of the housing (4).

7. Hydraulically damping engine mount according to any one of Claims 1 to 6, **characterised in that** the channel (9) is formed as a flow channel extending to the circumference of the channel unit (7).

8. Hydraulically damping engine mount according to any one of Claims 1 to 6, **characterised in that** the channel unit (7) is formed as a nozzle plate and the channel (9) is formed as a nozzle channel guided in the axial direction (a) through the nozzle plate.

9. Hydraulically damping engine mount according to any one of Claims 1 to 8, **characterised in that** the support spring (1) is greased on its outside contour with a lubricant.

10. Hydraulically damping engine mount according to any one of Claims 1 to 9, **characterised in that** the elastomer-metal part or elastomer-plastic part formed by the reinforced support spring (1) has on its circumference a radially oriented through opening for filling the mount with the damping agent.

11. Hydraulically damping engine mount according to any one of Claims 1 to 10, **characterised in that** by means of the thread pitch (10) brought into engagement with the corresponding inside contour of the housing (4), an overlap of about 2mm is formed over the whole mount circumference in the axial direction (a) on both sides of the channel unit (7) between the support spring (1) and the housing (4).

12. Hydraulically damping engine mount according to any one of Claims 1 to 11, **characterised in that** the channel unit (7) is held by a radially inwardly directed collar, which is formed by deformation of an end (12), projecting with respect to the axial direction (a) on the cover side from the housing (4), of the at least one insertion part (3) reinforcing the support spring (1).

13. Hydraulically damping engine mount according to any one of Claims 1 to 12, **characterised in that** the housing (4) is formed as a flange housing with a flange (15, 15') comprising openings (16, 16') for fastening the mount at the installation site.

14. Hydraulically damping engine mount according to any one of Claims 1 to 13, **characterised in that** the housing is closed on the side of the bellows (8) by a cover (11) of metal or plastic in order to protect it.

15. Hydraulically damping engine mount according to any one of Claims 1 to 14, **characterised in that** this is covered by a cap (17) on the side facing the bellows (8).

## Revendications

1. Palier d'agrégat à amortissement hydraulique avec un boîtier (4), qui loge un ressort de support élastomère (1) avec au moins un insert en métal ou en matière plastique, une partie centrale de palier (2), s'étendant dans la direction axiale (a) dans le boîtier (4), soutenu par le ressort de support (1), ainsi que deux chambres (5, 6) superposées dans la direction axiale (a), pour un fluide d'amortissement, à savoir une chambre de travail (5) et une chambre de compensation (6) séparée physiquement de la chambre de travail (5) par une unité de canal (7), la chambre de travail (5), entourée par le ressort de support (1) avec la partie centrale de palier (2), et la chambre de compensation (6) entourée par l'unité de canal (7) ainsi que par un soufflet élastique (8) disposé entre l'unité de canal (7) et le côté de l'unité de canal (7) opposé à la chambre de travail (5), étant couplées entre elles par l'intermédiaire d'un canal (9) dans l'unité de canal (7), **caractérisé en ce que**, sur le contour externe du ressort de support élastomère (1), préfabriqué avec la partie centrale de palier (2) sous la forme d'une unité modulaire, sur sa direction circonférentielle (u), est réalisée un pas de filetage (10) qui est emboîté avec un contour interne correspondant du boîtier (4).

2. Palier d'agrégat à amortissement hydraulique selon la revendication 1, **caractérisé en ce que** le ressort de support (1) et le boîtier (4) sont emboîtés entre eux de façon à ce que l'enveloppe élastomère du ressort de support (1) soit précontrainte dans la direction axiale (a) et dans la direction radiale.

3. Palier d'agrégat à amortissement hydraulique selon la revendication 1 ou 2, **caractérisé en ce que** le pas de filetage (10) est armé en direction de l'axe de palier (18) au moins partiellement par au moins un insert.

4. Palier d'agrégat à amortissement hydraulique selon l'une des revendications 1 à 3, **caractérisé en ce que** le contour externe du ressort de support (1) est constitué au niveau du pas de filetage (10) entièrement de l'élastomère du ressort de support (1).

5. Palier d'agrégat à amortissement hydraulique selon l'une des revendications 1 à 4, **caractérisé en ce que** l'au moins un insert (3) est vulcanisé entièrement dans l'élastomère du ressort de support (1).

6. Palier d'agrégat à amortissement hydraulique selon l'une des revendications 1 à 5, **caractérisé en ce que** le ressort de support élastomère (1) comprend, sur le côté de son extrémité axiale (13) opposée à un couvercle (11) fermant le boîtier (4), sur son contour externe, un moulage en forme de monticule (14) qui s'insère, lorsque le ressort de support (1) est entièrement vissé dans le boîtier (4), dans un renflement correspondant du boîtier (4).

7. Palier d'agrégat à amortissement hydraulique selon l'une des revendications 1 à 6, **caractérisé en ce que** le canal (9) est conçu comme un canal d'écoulement circulaire sur la circonférence de l'unité de canal (7).

8. Palier d'agrégat à amortissement hydraulique selon l'une des revendications 1 à 6, **caractérisé en ce que** l'unité de canal (7) est conçue comme une plaque de buse et le canal (9) est conçu comme un canal de buse guidé dans la direction axiale (a) à travers la plaque de buse.

9. Palier d'agrégat à amortissement hydraulique selon l'une des revendications 1 à 8, **caractérisé en ce que** le ressort de support (1) est mouillé, sur son contour externe, avec un lubrifiant.

10. Palier d'agrégat à amortissement hydraulique selon l'une des revendications 1 à 9, **caractérisé en ce que** la pièce élastomère-métal ou la pièce élastomère-matière plastique formée par le ressort de support armé (1) comprend, sur sa circonférence, une ouverture de passage orientée radialement pour le remplissage du palier avec le fluide d'amortissement.

11. Palier d'agrégat à amortissement hydraulique selon l'une des revendications 1 à 10, **caractérisé en ce qu'**une superposition d'environ 2 mm des deux côtés de l'unité de canal (7), entre le ressort de support (1) et le boîtier (4), est garantie sur toute la circonférence du palier dans la direction axiale (a) par le pas de filetage (10) emboîté avec le contour interne correspondant du boîtier (4).

12. Palier d'agrégat à amortissement hydraulique selon l'une des revendications 1 à 11, **caractérisé en ce que** l'unité de canal (7) est maintenue par un col orienté radialement vers l'intérieur, qui est formé par la déformation, par rapport à la direction axiale (a), côté couvercle, d'une extrémité (12) de l'au moins un insert (3) armant l'au moins un ressort de support (1), dépassant hors du boîtier (4).

13. Palier d'agrégat à amortissement hydraulique selon l'une des revendications 1 à 12, **caractérisé en ce que** le boîtier (4) est conçu comme un boîtier à brides avec une bride (15, 15') comprenant des passages (16, 16') pour la fixation du palier sur le site de montage.

14. Palier d'agrégat à amortissement hydraulique selon l'une des revendications 1 à 13, **caractérisé en ce que** le boîtier (4) est fermé, sur le côté du soufflet (8), pour sa protection, par un couvercle (11) en métal ou en matière plastique.

15. Palier d'agrégat à amortissement hydraulique selon l'une des revendications 1 à 14, **caractérisé en ce que** celui-ci est recouvert d'un capuchon (17) sur le côté opposé au soufflet (8).
